Europäisches Patentamt

European Patent Office

Office européen des brevets

(11) Publication number: **0 265 529 B1**

# EUROPEAN PATENT SPECIFICATION

(45) Date of publication of patent specification: **23.02.94**  (51) Int. Cl.[5]: **G06F  15/66**

(21) Application number: **87902758.9**

(22) Date of filing: **30.04.87**

(86) International application number:
**PCT/JP87/00270**

(87) International publication number:
**WO 87/06741 (05.11.87 87/24)**

(54) **IMAGE PROCESSING APPARATUS.**

(30) Priority: **30.04.86 JP 100341/86**

(43) Date of publication of application:
**04.05.88 Bulletin  88/18**

(45) Publication of the grant of the patent:
**23.02.94 Bulletin  94/08**

(84) Designated Contracting States:
**DE FR GB**

(56) References cited:
**EP-A- 0 085 210**
**JP-A- 581 275**
**JP-A-59 132 067**

**PATENT ABSTRACTS OF JAPAN, vol. 8, no.
259 (P-317)[1696], 28th November 1984; & JP-
A-59 132 067 (YOKOGAWA HOKUSHIN DENKI
K.K.) 30-07-1984**

(73) Proprietor: **FANUC LTD.**
**3580, Shibokusa Aza-Komanba, Oshino-mura
Minamitsuru-gun, Yamanashi 401-05(JP)**

(72) Inventor: **KURAKAKE, Mitsuo Izumi-Haitsu 103
3-3-10, Tamadaira
Hino-shi
Tokyo 191(JP)**
Inventor: **OOTSUKA, Shouichi 4-16-16, Hinodai
Hino-shi
Tokyo 191(JP)**
Inventor: **MURAOKA, Yutaka Fanuc Utsugi-Ryo
386-1, Ishikawa-cho
Hachioji-shi
Tokyo 192(JP)**

(74) Representative: **Billington, Lawrence Emlyn et
al
HASELTINE LAKE & CO
Hazlitt House
28 Southampton Buildings
Chancery Lane
London WC2A 1AT (GB)**

IEEE TRANSACTIONS ON CIRCUITS AND SYSTEMS, vol. CAS-28, no. 1, January 1981, pages 32-37, IEEE, New York, US; C.H. HUANG et al.: "Implementation of a fast digital processor using the residue number system"

## Description

This invention relates to an image processing apparatus and, more particularly, to an image processing apparatus capable of executing operations at high speed.

In various types of image processing for varying picture contrast or extracting the characteristics of an image, a look-up table (LUT) capable of executing image processing simply and at high speed is used in the prior art. For example, JP-A-59132067 discloses the processing of an image using a plurality of data table memories for high speed.

The look-up table consists primarily of a RAM, in which the image data of each pixel is inputted as an address and the result of an operation in accordance with a prescribed function in which the address value serves as a variable is stored in each storage area in advance, with the results of an operation being outputted as data.

When an operation is performed between two images, a dyadic look-up table (D-LUT) is used. The input side of this look-up table is divided into an upper order address input and a lower order address input, and the image data of each pixel of the two images are applied to respective ones of the inputs. The result of an operation in accordance with a prescribed function regarding the two inputs is stored at an address in which the higher order and lower order addresses are serially connected. For example, if the upper order address is $A_U$, the lower order address is $A_L$ and the function is $f(x,y)$, then an operational result $f(A_U,A_L)$, which is obtained when $x = A_U$, $y = A_L$ hold, is stored at an address $[A_U A_L]$.

In the case of a simple computation such as an arithmetic operation, the operation can be completed in a single cycle by using a look-up table (LUT) or dyadic look-up table (D-LUT). However, when an item of image data of one image is a variable I1 and an item of image data of the other image is a variable I2, an operation $I1^2 - I2^2$ necessary for comparison processing must be executed over several processing cycles by a look-up table which performs a computation for squaring the inputs, a subtracter and a memory device for temporarily storing intermediate operational results. Consequently, operations cannot be performed at high speed.

The present invention has been devised in view of the foregoing drawback and its object is to provide an image processing apparatus capable of speeding up processing by enabling execution of operations in a few processing cycles even if the operations between images are complicated.

According to the present invention there is provided an image processing apparatus for executing operations on an image, the apparatus comprising a plurality of data table memories provided in parallel and being characterised by:

a first image memory for providing first image data I1;

a second image memory for providing second image data I2;

a first dyadic look-up table, operatively connected to receive at first and second input terminals the first image data I1 and the second image data I2 as upper and lower order addresses respectively, for storing sum data corresponding to I1 + I2 at an address I1I2 and for providing the stored sum data as first output data in response to receiving the first and second image data I1 and I2;

a second dyadic look-up table provided in parallel with said first dyadic look-up table and operatively connected to receive at first and second input terminals the first and second image data I1 and I2 as upper and lower order addresses respectively, for storing difference data corresponding to I1 - I2 at an address I1I2, and for providing the stored difference data as second output data in response to receiving the first and second image data I1 and I2; and

arithmetic means, operatively connected to said first and second dyadic look-up tables, for receiving said first and second output data, for performing $(I1^2 - I2^2)$ in response to receiving the first and second output data and for providing an output corresponding to $(I1^2 - I2^2)$.

The Figure is a block diagram illustrating, by way of example, an image processing apparatus according to an embodiment of the invention.

An image processing apparatus in accordance with the invention is equipped with two dyadic look-up tables (D-LUT) 10, 20 each constituted by a RAM. The dyadic look-up tables 10, 20 each have a first input IN1 for an upper order address input, a second input IN2 for a lower order address input, and a data output OUT.

Assuming that image data inputted to the first input IN1 of dyadic look-up table 10 is I1 and data inputted to the second input IN2 is I2, an operational result $f_1(I1,I2)$ based on a prescribed function $f_1$ is stored as data at an address $[I1I2]$. Further, assuming that image data inputted to the first input IN1 of dyadic look-up table 20 is I1' and data inputted to the second input IN2 is I2', an operational result $f_2(I1',I2')$ based on a prescribed function $f_2$ is stored as data at an address $[I1'I2']$.

When the data I1, I2 are applied to the first and second inputs, respectively, the dyadic look-up tables 10, 20 output data, with data $f_1(I1,I2)$, $f_2(I1,I2)$ stored in the corresponding addresses $[I1I2]$ serving as operational results O1, O2, respectively, so that an operation may be performed between the images.

The input sides of the dyadic look-up tables 10, 20 are connected to the output sides of image memories 40, 50, and it is arranged so that image data I1 of one of the two images are delivered to the first input IN1 and image data I2 of the other image are delivered to the second input IN2.

The output sides of the two dyadic look-up tables 10, 20 are connected to an image arithmetic unit (APU) 30. When the data O1 from the dyadic look-up table 10 and the data O2 from the dyadic look-up table 20 are inputted thereto, the image arithmetic unit 30 executes an operation based on a prescribed function g.

The result O of the operation is delivered to e.g. an image processor 60 connected to the output side of the arithmetic unit.

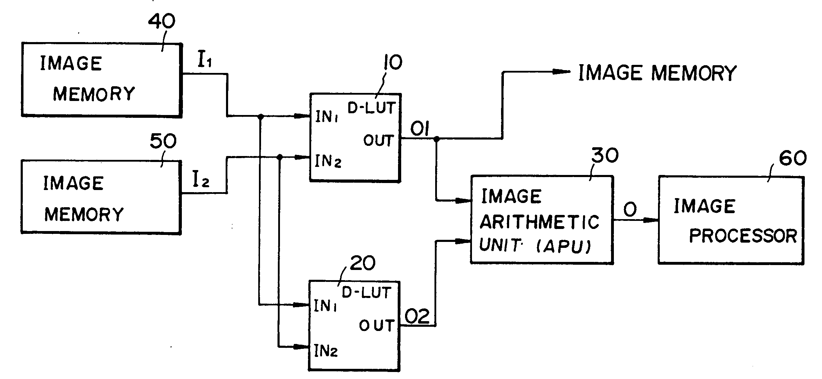

In Fig. 1, the output O1 of the dyadic look-up table 10 is transferred to an image memory or temporary storage area when necessary. It is arranged so that the output O1 can be made into a new image or so that the output O1 can be utilized as an intermediate operational result required for certain image processing.

When it is desired to perform an operation, e.g. $I1^2 - I2^2$, between two images using the image processing apparatus of the invention, data based on $f_1 = I1 + I2$, $f_2 = I1 - I2$ are stored beforehand at the address [I1I2] of the dyadic look-up tables 10, 20, respectively, and it is arranged so that the operation $g = O1 \times O2$ can be executed by the image arithmetic unit 30.

When the image data I1, I2 related to the two images are read out of the image memories 40, 50 and inputted to the dyadic look-up tables 10, 20, the dyadic look-up table 10 regards the combined value of I1 and I2 as an address input, reads out data $I1 + I2$ stored at the address [I1I2] and outputs the data as O1.

At the same time, the dyadic look-up table 20 regards the combined value of I1 and I2 as an address input, reads out data $I1 - I2$ stored at the address [I1I2] and outputs the data as O2.

The data O1, O2 are immediately inputted to the image arithmetic unit 30, which is connected to the output sides of the look-up tables, where the data are multiplied together. The result $O1 \times O2$ of the multiplication, namely $I1^2 - I2^2$, is outputted to the externally located image processor 60.

Accordingly, the operation $g\{f_1(I1,I2), f_2(I1,I2)\}$ is executed by a single manipulation with regard to the two items of image data I1, I2, as mentioned above. A memory for temporarily storing intermediate calculation values is unnecessary.

In accordance with the image processing apparatus according to the invention, as described above, processing can be executed through a small number of cycles even if the functional calculation among a plurality of images is complicated. This makes possible a marked rise in image processing speed.

## Claims

1. An image processing apparatus for executing operations on an image, the apparatus comprising a plurality of data table memories (10,20) provided in parallel and being characterised by:

a first image memory (40) for providing first image data I1;

a second image memory (50) for providing second image data I2;

a first dyadic look-up table (10), operatively connected to receive at first and second input terminals the first image data I1 and the second image data I2 as upper and lower order addresses respectively, for storing sum data corresponding to $I1 + I2$ at an address I1I2 and for providing the stored sum data as first output data in response to receiving the first and second image data I1 and I2;

a second dyadic look-up table (20) provided in parallel with said first dyadic look-up table (10) and operatively connected to receive at first and second input terminals the first and second image data I1 and I2 as upper and lower order addresses respectively, for storing difference data corresponding to $I1 - I2$ at an address I1I2, and for providing the stored difference data as second output data in response to receiving the first and second image data I1 and I2; and

arithmetic means (30), operatively connected to said first and second dyadic look-up tables (10,20), for receiving said first and second output data, for performing ($I1^2 - I2^2$) in response to receiving the first and second output data and for providing an output corresponding to ($I1^2 - I2^2$).

## Patentansprüche

1. Bildverarbeitungsgerät zur Durchführung von Operationen an einem Bild, wobei das Gerät eine Mehrzahl von parallel angeordneten Datentafelspeichern (10,20) umfaßt und gekennzeichnet ist durch

einen ersten Bildspeicher (40), der erste Bilddaten I1 liefert,

einen zweiten Bildspeicher (50), der zweite Bilddaten I2 liefert,

eine erste dyadische Nachschlagetabelle (10), die über zwei Eingangsanschlüsse die ersten Bilddaten I1 und die zweiten Bilddaten I2 als erste bzw. zweite Adressenstelle empfängt, um die I1 + I2 entsprechenden Summendaten an einer Adresse I1I2 zu speichern und die gespeicherten Summendaten nach Empfang der ersten und zweiten Bilddaten I1 und I2 als erste Ausgangsdaten bereitzustellen,

eine zweite dyadische Nachschlagetabelle (20), die zur ersten dyadischen Nachschlagetabelle (10) parallelgeschaltet ist und über zwei Eingangsanschlüsse die ersten und zweiten Bilddaten I1 und I2 als erste bzw. zweite Adressenstelle empfängt, um die I1 - I2 entsprechenden Differenzdaten an einer Adresse I1I2 zu speichern und die gespeicherten Differenzdaten nach Empfang der ersten und zweiten Bilddaten I1 und I2 als zweite Ausgangsdaten bereitzustellen,

und eine mit der ersten und mit der zweiten Nachschlagetabelle (10, 20) verbundene Recheneinrichtung (30), die die ersten und zweiten Ausgangsdaten empfangt, nach Empfang der ersten und zweiten Ausgangsdaten die Operation ($I1^2$ - $I2^2$) durchführt und ein ($I1^2$ - $I2^2$) entsprechendes Ausgangssignal liefert.

## Revendications

1. Un appareil de traitement d'images pour effectuer des opérations sur une image, l'appareil comprenant un ensemble de mémoires de table de données (10, 20) prévues en parallèle et étant caractérisé par :

une première mémoire d'image (40) pour fournir de premières données d'image I1 ;

une seconde mémoire d'image (50) pour fournir de secondes données d'image I2 ;

une première table de consultation dyadique (10), reliée de manière opérationnelle pour recevoir sur de première et seconde bornes d'entrée les premières données d'image I1 et les secondes données d'image I2 en tant qu'adresses d'ordre supérieur et respectivement inférieur, afin de stocker des données de somme correspondant a I1 + I2 à une adresse I1I2 et pour fournir les données de somme stockées en tant que premières données de sortie en réponse a la réception des premières et secondes données d'images I1 et I2 ;

une seconde table de consultation dyadique (20) prévue en parallèle avec ladite première table de consultation dyadique (10) et reliée de manière opérationnelle pour recevoir sur de première et seconde bornes d'entrées les premières et secondes données d'image I1 et I2 en tant qu'adresses d'ordre supérieur et respectivement inférieur, afin de stocker des données de différence correspondant à I1 - I2 à une adresse I1I2, et pour fournir les données de différence stockées en tant que secondes données de sortie en réponse à la réception des premières et secondes données d'image I1 et I2 ; et

des moyens arithmétiques (30), reliés de manière opérationnelle auxdites première et seconde tables de consultation dyadiques (10, 20) pour recevoir lesdites premières et secondes données de sortie, afin d'effectuer ($I1^2$ - $I2^2$) en réponse à la réception des premières et secondes données de sortie et pour fournir une sortie correspondant à ($I1^2$ - $I2^2$).

EP 0 265 529 B1